Europäisches Patentamt

(19) European Patent Office

Office européen des brevets

(11) Numéro de publication: **0 120 758**
**B1**

(12) **FASCICULE DE BREVET EUROPEEN**

(45) Date de publication du fascicule du brevet:
28.01.87

(51) Int. Cl.⁴: **B 62 M 3/08**

(21) Numéro de dépôt: **84400491.1**

(22) Date de dépôt: **12.03.84**

(54) **Ensemble d'une pédale pour cycle et d'un cale pédale.**

(30) Priorité: **22.03.83 FR 8304629**

(43) Date de publication de la demande:
**03.10.84 Bulletin 84/40**

(45) Mention de la délivrance du brevet:
**28.01.87 Bulletin 87/5**

(84) Etats contractants désignés:
**DE GB IT**

(56) Documents cités:
**EP - A - 0 057 240**
**EP - A - 0 059 132**
**FR - A - 941 771**
**FR - A - 2 440 866**
**FR - E - 29 581**
**US - A - 608 620**

(73) Titulaire: **Bon, Raymond E., 4, sente des Favrils,**
**F-78570 Andresy (FR)**

(72) Inventeur: **Bon, Raymond E., 4, sente des Favrils,**
**F-78570 Andresy (FR)**

(74) Mandataire: **Hoisnard, Jean-Claude et al, Cabinet Beau**
**de Lomenie 55, rue d'Amsterdam, F-75008 Paris (FR)**

## Description

La présente invention a pour objet un perfectionnement aux pédales pour cycles.

La demande de brevet EP-A-0059132 concerne une pédale pour cycle qui comporte un moyen de réglage de la position du point d'appui du pied du cycliste sur la pédale dont la surface d'appui est prolongée en avant de l'axe de pivotement sur une manivelle du pédalier; cette pédale comprend une première plate-forme qui est montée pivotante sur un axe solidaire de la manivelle et une deuxième plate-forme montée de façon réglable sur la première plate-forme en avant de l'axe de pivotement sur la manivelle. Cette disposition a principalement pour but d'amener le point d'appui du pied du cycliste sur l'axe de la pédale et même en avant dudit axe, de manière à utiliser totalement l'action de la manivelle.

Ladite demande concerne aussi un dispositif dans lequel l'axe de la pédale est monté dans un palier comportant un moyen d'accrochage d'un cale-pédale fixé sous la semelle de la chaussure du cycliste. Ces caractéristiques sont conformes au préambule de la revendication 1.

La disposition suivant la présente invention a pour but d'améliorer encore la position du pied du cycliste.

Conformément à la présente invention, le cale pédale comprend deux bossages susceptibles, d'une part, d'être disposés de part et d'autre du palier de montage, d'autre part, d'être en appui sur deux faces d'appui que comporte la plate-forme de la pédale et qui sont contenues dans un plan commun contenant lui-même le centre de l'axe de pédale.

Cette nouvelle disposition de la pédale permet d'obtenir l'appui du pied sur l'axe de la pédale et même légèrement en avant de l'axe, alors que l'appui est totalement éliminé à l'arrière de ladite pédale, de manière à obtenir un appui du pied bien équilibré permettant de développer toute la puissance musculaire de l'utilisateur. Par ailleurs, le dispositif perfectionné permet d'abaisser la cage de la pédale d'une façon importante, et par conséquent, la selle et le guidon étant également abaissés, il en résulte un gain appréciable en ce qui concerne l'aérodynamisme du cycle. Enfin, la disposition particulière de la plate-forme de la pédale par rapport à l'axe de pivotement permet d'obtenir un ensemble équilibré et une pédale qui reste en position horizontale quelle que soit la position du pédalier.

Suivant une autre caractéristique, le cale-pédale comporte une plaque sur laquelle sont fixés deux bossages engagés de part et d'autre du palier et qui sont en appui sur la plate-forme de la pédale suivant un plan $XX_1$ passant par le centre de l'axe de la pédale.

Avec le dispositif suivant l'invention, la plate-forme de la pédale est disposée en dessous de l'axe de rotation et le point d'appui principal se trouve sur l'axe et au centre de celui-ci et non plus à l'arrière de la cage comme dans une pédale traditionnelle. On obtient ainsi une convergence parfaite entre la position du pied et le point d'appui principal. Cet avantage est obtenu en avançant le cale-pédale de 30 mm environ, le pied ne changeant pas de position. Du fait que l'appui principal s'effectue dans un plan contenant l'axe de la pédale, il en résulte une rotation circulaire du pied du cycliste.

D'autres caractéristiques et avantages de l'invention seront mieux compris à la lecture de la description qui va suivre de plusieurs modes de réalisation et en se référant aux dessins annexés, sur lesquels:

– la figure 1 est une vue en plan d'une pédale avec un palier fixé sur la plate-forme au moyen de colliers;

– la figure 2 est une vue en élévation et en coupe suivant la ligne II–II de la figure 1;

– la figure 3 est une vue en élévation de face du cale-pédale;

– la figure 4 est une vue en plan d'une pédale avec un palier fixé directement sur la plate-forme;

– la figure 5 est une vue en élévation et en coupe suivant la ligne V–V de la figure 4;

– la figure 6 est une vue en élévation de face du cale-pédale;

– la figure 7 est une vue en plan d'une pédale munie d'une échancrure pour le passage des pointes du cale-pédale;

– la figure 8 est une vue en élévation et en coupe suivant la ligne VIII–VIII de la figure 7;

– la figure 9 est une vue en élévation de face du cale-pédale;

– la figure 10 est une vue en plan d'une pédale equilibrée revenant en position horizontale;

– la figure 11 est une vue en élévation et en coupe suivant la ligne XI–XI de la figure 10;

– la figure 12 est une vue en élévation et en coupe suivant la ligne XII–XII de la figure 13 d'une pédale perfectionnée suivant l'invention;

– la figure 13 est une vue en plan d'une pédale suivant l'invention sur laquelle est monté un cale-pied;

– la figure 14 est une vue en élévation latérale et en coupe partielle d'un autre mode de réalisation d'une pédale;

– la figure 15 est une vue en coupe suivant la ligne XV–XV de la figure 14.

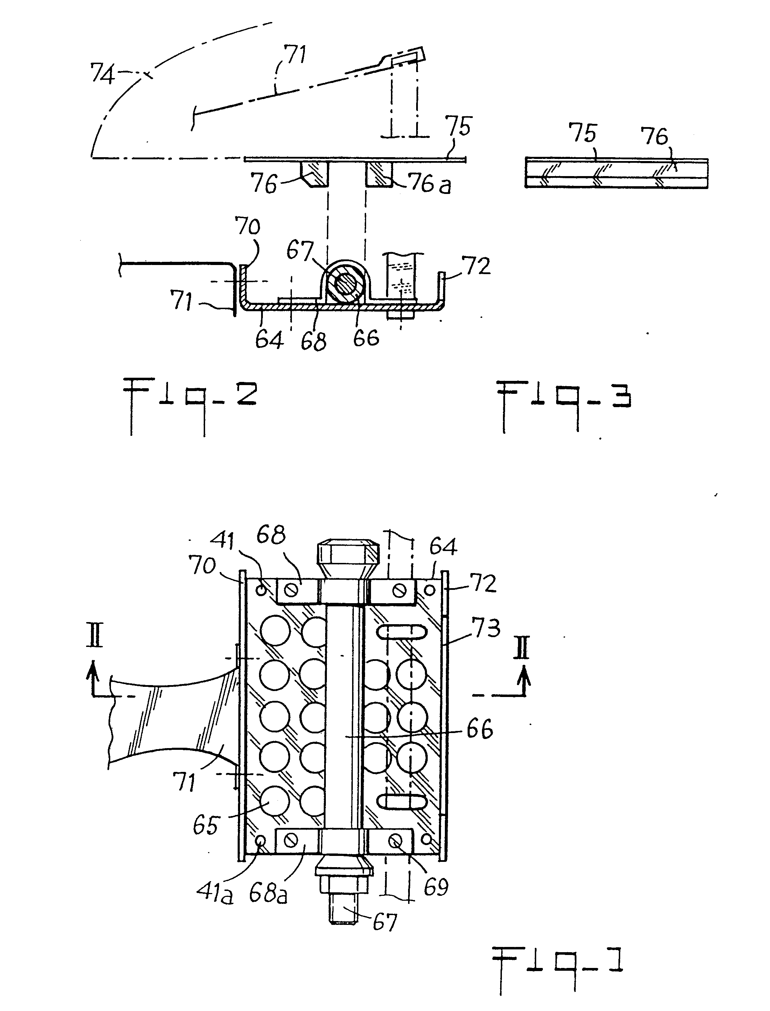

Aux figures 1 et 2 on a représenté une pédale qui comprend une plate-forme 64 percée ou non de trous 65 pour alléger la pédale et sur laquelle est fixé sur sa face supérieure un palier 66 dans lequel est monté rotatif un axe de pédale 67 qui est fixé à l'extrémité d'une manivelle d'un pédalier du cycle non représenté au dessin. Le palier 66 est monté de façon réglable en longueur sur la plate-forme au moyen de colliers, 68, 68a, fixés par des vis 69 engagées dans deux séries de trous prévus de chaque côté de la plate-forme 64.

A l'avant et à l'arrière de la plate-forme sont prévus des bords 70 et 72 repliés vers le haut perpendiculairement à ladite plate-forme, ledit bord avant 70 constituant un support pour un cale-pied 71, alors que le bord arrière 72 présente dans sa partie centrale une échancrure 73 pour le passage de la semelle de la chaussure du cycliste qui ne doit pas porter à l'arrière de la pédale mais au centre et à l'avant comme il a été précisé ci-dessus. Sous la semelle de la chaussure 74 (figures 2 et 3) du cycliste est fixée une plaque 75 d'un cale-pédale qui présente deux bossages 76, 76a, susceptibles de venir s'engager de part et d'autre du palier 66, alors que la plaque 75 vient reposer sur la partie supérieure du palier 66.

Par ailleurs, la partie avant de la plaque 75 vient en appui contre le bord avant 70 de la plate-forme, de telle sorte que le pied est en appui dans la partie centrale de la pédale sur l'axe 67 et à l'avant sur le bord 70.

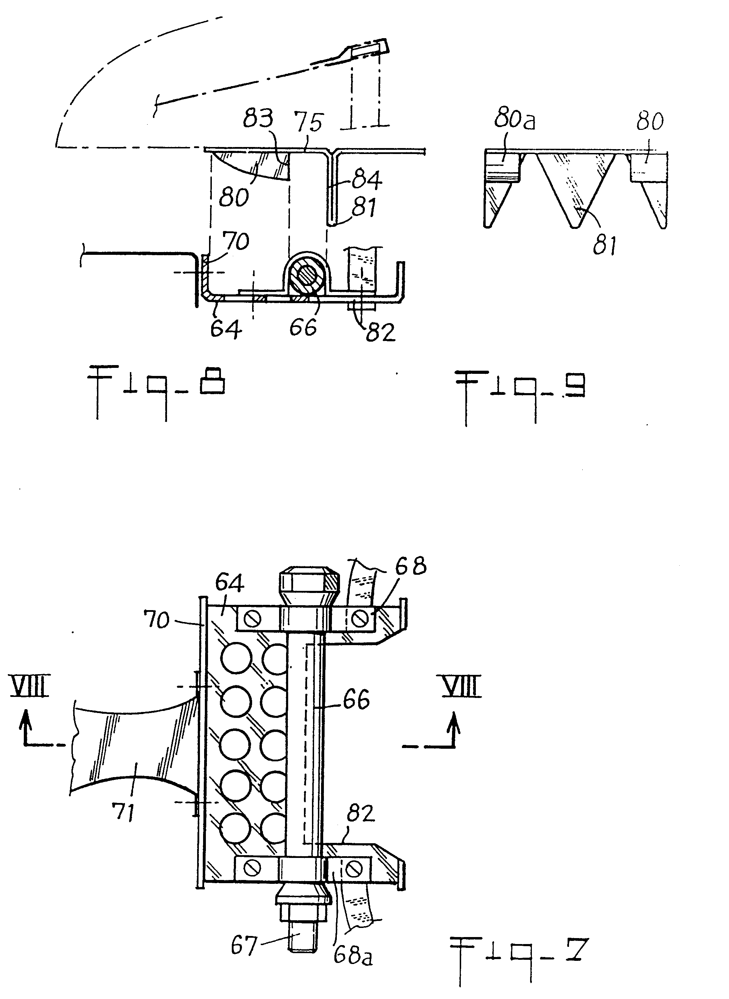

Aux figures 4, 5 et 6 on a représenté une variante de réalisation du dispositif qui comporte un palier 77 dans lequel est monté rotatif l'axe 67, ledit palier présentant à ses deux extrémités des alésages ou cheminées 78, 78a, dans lesquels sont montées des vis pour la fixation du palier 77 de façon réglable en longueur sur la plate-forme 64.

Dans sa partie centrale, le palier 77 présente une forme quadrangulaire dont les faces sont en contact avec les faces 79, 79a, des bossages 76, 76a, et avec la face inférieure de la plaque 75.

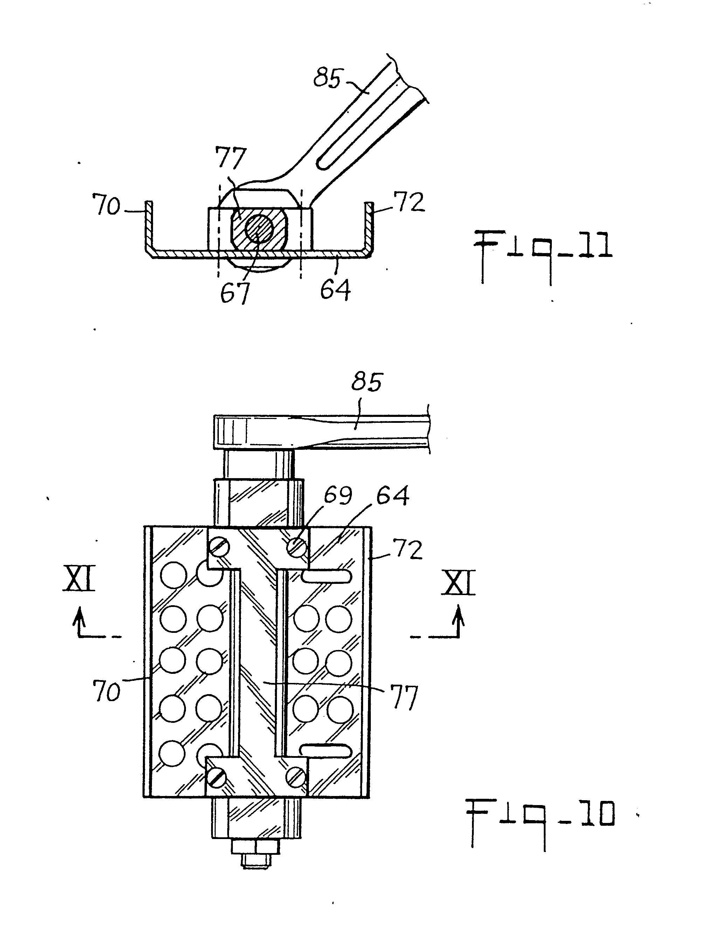

La pédale représentée aux figures 7, 8, 9 est identique au mode de réalisation des figures 1 et 2. Cependant, le cale-pédale comporte à l'avant deux bossages 80, 80a, fixés sur la plaque 75 du cale-pédale et à l'arrière ladite plaque est conformée pour présenter des pointes 81, qui s'étendent perpendiculairement à la plate-forme 64 et sont engagées dans une échancrure 82 ménagée à l'arrière de la plate-forme 64.

Lorsque la plaque 75 est en appui sur le palier 66 et sur le bord avant 70 de la plate-forme, les bossages 80, 80a, sont en appui par leur face 83 d'un côté contre le palier 66 et les pointes 81 par leur face 84 contre l'autre côté dudit palier.

Les pointes 81 sont destinées aux cyclistes, qui pratiquent le cross cyclo-pédestre, c'est-à-dire qui doivent utiliser alternativement leur cycle et faire de la course à pied où ils utilisent les pointes. Bien entendu, il est possible d'utiliser toute autre form de pointes et de les associer à des bossages identiques à ceux des figures 1 et 2.

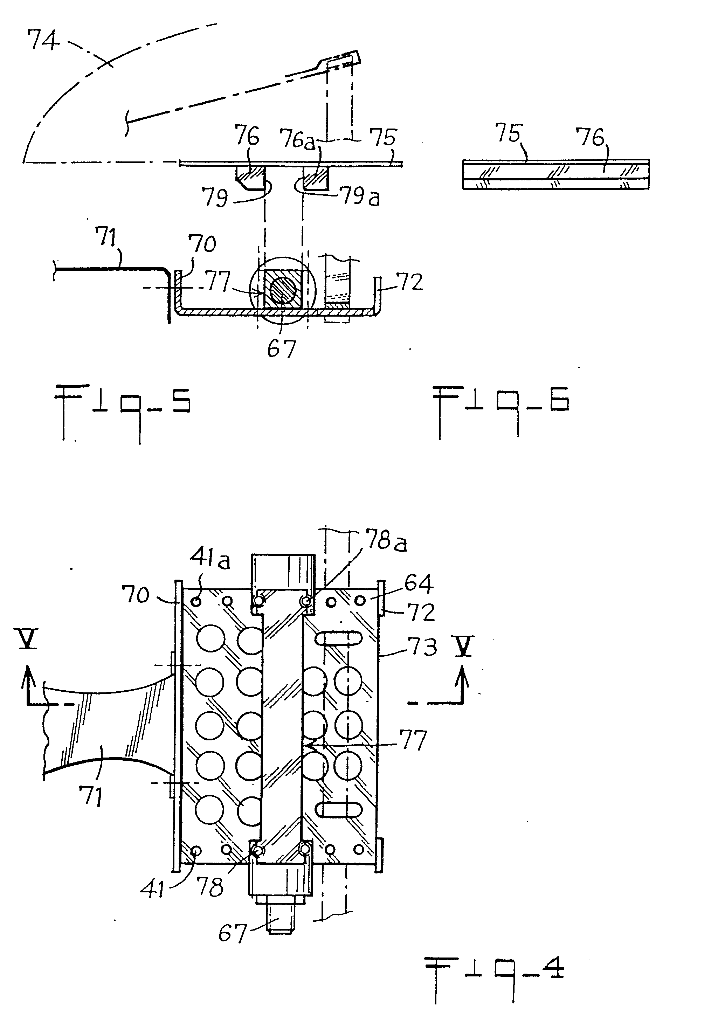

Aux figures 10 et 11, on a représenté un autre mode de réalisation de l'invention dans lequel la pédale est identique à celle des figures 4, 5. Toutefois, le bord replié arrière 72 ne comporte pas d'échancrure 73 et il est identique au bord replié avant 70. Il en résulte que la plate-forme 64 étant située sous l'axe 67 et que l'ensemble étant parfaitement équilibré, la pédale montée sur la manivelle 85 revient automatiquement en position horizontale quelle que soit la position de la manivelle, ce qui facilite la pose du pied sur la pédale.

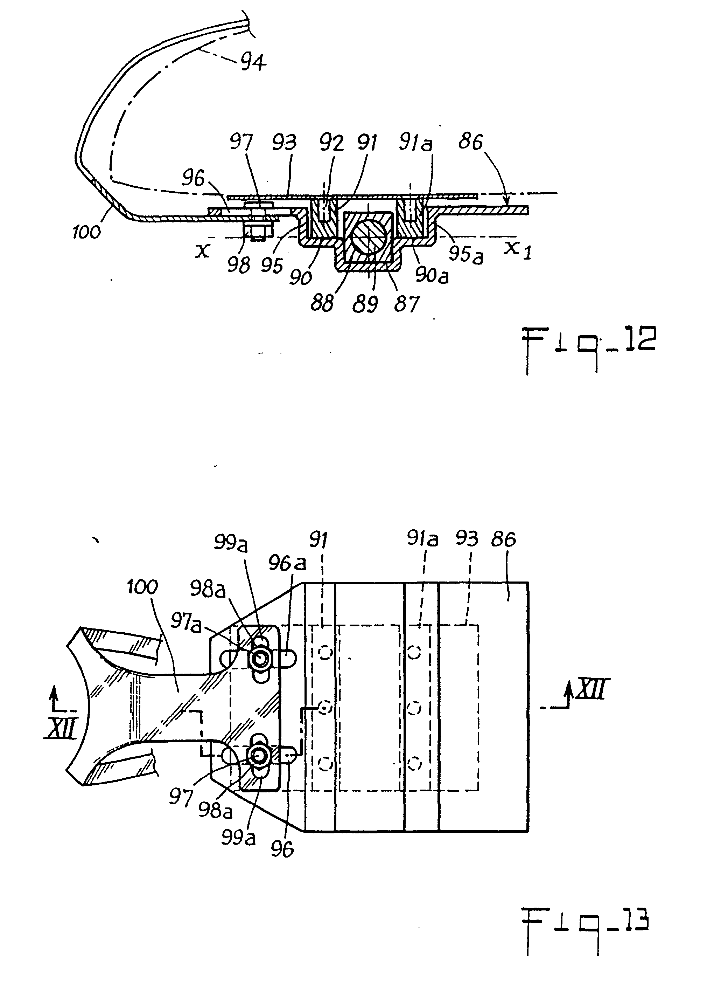

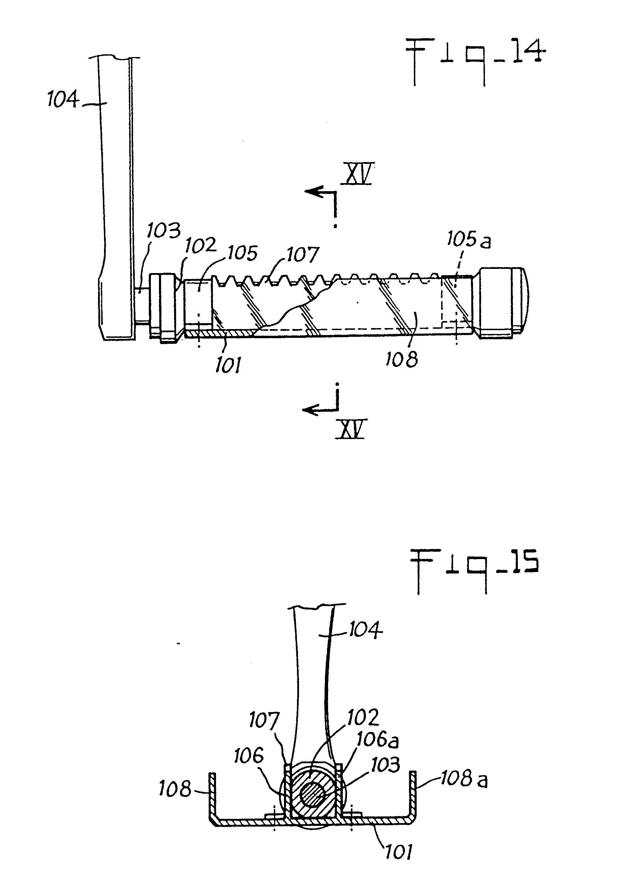

Aux figures 12 et 13, on a représenté une pédale suivant l'invention qui comprend une plate-forme 86 présentant dans sa partie médiane une rainure 87 dans laquelle est engagé un palier 88 recevant un axe 89 monté rotatif dans le palier et fixé de façon connue à l'une de ses extrémités sur une manivelle non représentée au dessin.

Le palier 88 est fixé par un moyen connu sur la plate-forme 86, présente deux surfaces 90, 90a, situées dans un plan $XX_1$ passant par le centre de l'axe 89 de la pédale. Sur les surfaces 90, 90a, de la plate-forme sont en appui des bossages 91, 91a, fixés par des vis 92, sur une plaque 93 d'un cale-pédale lui même fixé sur la semelle d'une chaussure 94.

De cette manière les bossages 91, 91a, du cale-pédale sont disposés de part et d'autre du palier 88, et en appui contre les surfaces 90, 90a, de la plate-forme situées dans un plan passant par le centre de l'axe 89.

Les surfaces 90, 90a, sont prolongées de chaque côté par des surfaces 95, 95a, perpendiculaires à ces dernières et contre lesquelles sont susceptibles de venir en butée les bossages 91, 91a.

A l'avant de la plate-forme 86, il est prévu deux trous oblongs, 96, 96a, parallèles et s'étendant suivant un axe perpendiculaire à l'axe de rotation de la pédale.

Dans les trous 96, 96a, sont engagées des vis 97, 97a, munies d'écrous 98, 98a, et qui sont montées dans deux trous oblongs 99, 99a, ménagés dans un cale-pied 100 et s'étendant suivant un axe perpendiculaire aux trous oblongs 96, 96a, prévus dans la plate-forme.

Cette disposition permet de régler la position du cale-pied 100 suivant deux directions perpendiculaires.

Aux figures 14 et 15 on a représenté un autre mode de réalisation d'une pédale qui comprend une plate-forme 101, sur laquelle est fixé sur sa face supérieure un palier 102 dans lequel est monté rotatif un axe de pédale 103 qui est fixé à l'extrémité d'une manivelle 104, d'un pédalier de cycle.

Le palier 102 est monté sur la plate-forme au moyen de colliers 105, 105a, fixé par des vis engagées dans des trous taraudés prévus de chaque côté de la plate-forme. De part et d'autre du palier 102, la plate-forme est solidaire de deux parois parallèles 106, 106a, s'étendant perpendiculairement à la plate-forme 101, lesdites parois présentant des bords dentés 107 dont le sommet des dents s'étend à un niveau supérieur à celui du palier 102 et des deux bords parallèles 108, 108a, de la plate-forme s'étendant perpendiculairement à celle-ci. Les parois 106, 106a, peuvent être également rapportées sur la plate-forme 101, au moyen d'une pièce en U qui est maintenue serrée entre le palier 102 et la plate-forme 101.

Dans le mode de réalisation des figures 3 et 4, le pied du cycliste est en appui sur la partie centrale de la pédale sur le bord denté 107 des parois 106, 106a.

## Revendications

1. Ensemble d'une pédale pour cycle et d'un cale-pédale (76, 76a 75; 80, 81, 75; 91, 91a, 93) comprenant:
— une plate-forme (64, 86, 101) de la pédale,
— un axe de pédale (67, 89, 103),
— un palier (66, 77, 88) de montage de l'axe de pédale (67, 89, 103), fixé (le palier (66, 77, 88) sur la plate-forme (64, 86, 101), et comportant un moyen d'accrochage d'un cale-pédale fixé sous la semelle de la chaussure du cycliste, caractérisé en ce que le cale-pédale (76, 76a, 75; 80, 81, 75; 91, 91a, 93) comprend deux bossages (76, 76a; 80, 81; 91, 91a) susceptibles, d'une part, d'être disposés de part et d'autre du palier de montage (66, 77, 88), d'autre part, d'être en appui sur deux faces d'appui (90, 90a) que comporte la plate-forme (64, 86, 101) de la pédale et qui sont contenues dans un plan commun (XX₁) contenant lui-même le centre de l'axe de pédale (67, 89, 103).

2. Ensemble selon la revendication 1, caractérisé en ce que la plate-forme (86) de la pédale comporte une rainure (87), dans laquelle est disposé l'axe (89) de la pédale et de part et d'autre de laquelle sont disposées les deux dites faces d'appui (90, 90a) de la plate-forme (86).

3. Ensemble selon l'une quelconque des revendications 1 et 2, caractérisé en ce que les faces d'appui (90, 90a) de la plate-forme (86) sont prolongées par des faces (95, 95a), qui leur sont perpendiculaires et qui sont susceptibles de constituer des butées pour les bossages (91, 91a) du cale-pédale.

4. Ensemble selon l'une quelconque des revendications 1 à 3, caractérisé en ce qu'il comporte en outre un cale-pied (100) fixé sur la plate-forme (86) au moyen, d'une part, d'au moins deux premiers trous oblongs (96, 96a) dont est munie la plate-forme (86) et qui s'étendent perpendiculairement à l'axe de pédale (89), d'autre part, d'au moins deux deuxièmes trous oblongs (99, 99a), dont est muni le cale-pied (100) et qui s'étendent parallèlement à l'axe de pédale (89), des moyens de fixation (97–98; 97a–98a) étant susceptibles de traverser les premiers (96, 96a) et deuxièmes (99, 99a) trous oblongs.

**Patentansprüche**

1. Konstruktion eines Pedals für Fahrräder mit Vorrichtung zum Festhalten des Pedals (76, 76a, 75; 80, 81, 75; 91, 91a, 93), bestehend aus:
– einer Aufdruckfläche für das Pedal (64, 86, 101),
– einer Pedalachse (67, 89, 103),
– einem Pedallager (66, 77, 88) für den Einbau der Pedalachse (67, 89, 103), welches an der Aufdruckfläche (64, 86, 101) angebracht ist und eine Vorrichtung aufweist zum Festhalten eines unter der Schuhsohle des Radfahrers angebrachten Pedalfusshalters,
dadurch gekennzeichnet, dass die Vorrichtung (76, 76a, 75; 80, 81, 75; 91, 91a, 93) zwei Buckel (76, 76a; 80, 81; 91, 91a) aufweist, die einerseits auf beiden Seiten des Lagers (66, 77, 88) liegen können und andererseits zwei Stützflächen (90, 90a) aufliegen, die die Pedalaufdruckfläche (64, 86, 101) aufweist und die in einer gemeinsamen Ebene (XX₁) liegen, in welcher sich der Mittelpunkt der Pedalachse (67, 89, 103) befindet.

2. Konstruktion nach Anspruch 1, dadurch gekennzeichnet, dass die Aufdruckfläche (86) des Pedals eine Rille (87) aufweist, in welcher die Pedalachse (89) liegt und auf deren beiden Seiten die beiden sogenannten Stützflächen (90, 90a) der Aufdruckfläche (86) angeordnet sind.

3. Konstruktion nach einem der Ansprüche 1 und 2, dadurch gekennzeichnet, dass die Stützflächen (90, 90a) der Aufdruckfläche (86) von senkrecht zu ihnen liegenden Flächen (95, 95a) verlängert werden, welche Anschläge für die Buckel (91, 91a) der Pedalhalter-Vorrichtung bilden können.

4. Konstruktion nach einem der Ansprüche 1 bis 3, dadurch gekennzeichnet, dass sie ferner einen Fusshalter (100) aufweist, der mit Hilfe von mindestens zwei ersten länglichen, sich in der Aufdruckfläche (86) befindenden und senkrecht zur Pedalachse (89) erstreckenden Löchern (96, 96a) einerseits, und von mindestens zwei zweiten länglichen, im Fusshalter (100) liegenden, sich parallel zur Pedalachse (89) erstreckenden Löchern (99, 99a), andererseits auf der Aufdruckfläche (86) befestigt ist, wobei Befestigungsmittel (97–98; 97a–98a) die ersten (96, 96a) und zweiten (99, 99a) länglichen Löcher durchdringen können.

**Claims**

1. A pedal and pedal-stop assembly for cycles (76, 76a, 75; 80, 81, 75; 91, 91a, 93), comprising:
– a pedal platform (64, 86, 101),
– a pedal axle (67, 89, 103),
– a bearing (66, 77, 88) for mounting the pedal axle (67, 89, 103) fixedly mounted (the bearing 66, 77, 88) on the platform (64, 86, 101) and comprising a means for fastening a pedal stop secured under the sole of the cyclist's shoe, characterized in that the pedal-stop (76, 76a, 75; 80, 81, 75; 91, 91a, 93) comprises two lugs (76, 76a; 80, 81; 91, 91a) adapted to be placed, on the one hand, on either side of the bearing (66, 77, 88), on the other hand, to rest on two bearing surfaces (90, 90a) which the platform (64, 86, 101) of the pedal comprises, and which are contained in a common plane (XX₁) itself containing the centre of the pedal axle (67, 89, 103).

2. Assembly according to claim 1, characterized in that the platform (86) of the pedal includes a groove (87), in which the axle (89) of the pedal is disposed, said two bearing surfaces (90, 90a) of the platform (86) being disposed on either side of the groove (87).

3. Assembly according to any one of claims 1 and 2, characterized in that the two bearing surfaces (90, 90a) of the platform (86) are extended by a pair of abutment surfaces (95, 95a), perpendicular thereto, so as to form abutments for the lugs (91, 91a) of the pedal stop.

4. Assembly according to any one of claims 1 to 3, characterized in that it further comprises a toe clip (100) secured to the platform (86) by means, on the one hand, of at least a pair of oblong holes (96, 96a) provided in the platform (86) and which extend perpendicularly to the pedal axle (89), and on the other hand, at least another pair of oblong holes (99, 99a), provided in the toe clip (100) and which extend in parallel to the pedal axle (89), and further comprising securing means (97–98; 97a–98a) extending through the first (96, 96a) and second (99, 99a) oblong holes.

Fig-2

Fig-3

Fig-1

Fig-5

Fig-6

Fig-4

Fig. 8

Fig. 9

Fig. 7

Fig.11

Fig.10

Fig-12

Fig-13

Fig_14

104

XV

103  102  105  107          105a

101          108

XV

Fig_15

104

107        102
              106a
106            103

108        108a

101